# EUROPEAN PATENT APPLICATION

(11) **EP 4 560 987 A1**
(43) Date of publication of application: **28.05.2025**
(21) Application number: 24791272.8
(22) Date of filing: 27.08.2024
(51) Int. Cl.: H04L 12/28, G06F 3/16, H04W 4/80, G06F 3/00

(54) **ELECTRONIC DEVICE FOR CONTROLLING EXTERNAL DEVICE AND CONTROL METHOD THEREOF**

(30) Priority: 06.10.2023 KR 20230133112
(71) Applicant: Samsung Electronics Co., Ltd, Suwon-si, Gyeonggi-do 16677 (KR)
(72) Inventor: YOON, Sukun, Suwon-si, Gyeonggi-do 16677 (KR); KIM, Minji, Suwon-si, Gyeonggi-do 16677 (KR); KIM, Junghee, Suwon-si, Gyeonggi-do 16677 (KR); BAE, Seockhun, Suwon-si, Gyeonggi-do 16677 (KR)
(74) Representative: Appleyard Lees IP LLP
(86) International application number: PCT/KR2024/012805
(87) International publication number: WO 2025/075305

(57) **Abstract**

An electronic device including a communication interface and at least one processor, the at least one processor is configured to identify whether a low-power state of an external device is supported based on identification information of the external device according to a preset condition, control the communication interface to transmit a first control command corresponding to the low-power state of the external device to the external device based on the external device supporting the low-power state, and control the communication interface to transmit a second control command corresponding to a power control of the external device to the external device based on the external device not supporting the low-power state.

## Description

### [Technical Field]

The disclosure relates to electronic devices and control methods thereof, and more particularly to electronic devices and control methods thereof that control external devices.

### [Background Art]

Home appliances for various purposes have been being developed, and recently the number of home appliances within homes has increased. As the number of home appliances increases, there is increased motivation to manage their total power consumption efficiently.

Various methods for managing power consumption exist, but generally involve inconvenience for a user, in having to manually activate a reduced power consumption mode, or input a command for activating such a mode to each of the home appliances.

As communication methods used different home appliances provided within the home may vary, and because old home appliances may not able to receive a command for activating a low-power mode from a server, user terminal device or the like, uniformly converting a plurality of home appliances to operate in a low-power mode can be inconvenient.

For example, home appliances capable of communicating with a server may be converted to the low-power mode, whether operating indoors or outdoors, using a user terminal device or the like, but because legacy devices, i.e. devices which are not able to communicate with a server are not able to receive a command for converting to the low-power mode from the server, there are difficulties in efficiently managing power consumption.

Accordingly, it would be desirable to havea method of efficiently managing the total power consumption within a household by appropriately operating home appliances in low-power mode, when the home appliances operate various, perhaps different communication methods..

### [Disclosure]

### [Technical Solution]

In one example embodiment there is provided an electronic device including a communication interface, and at least one processor, the at least one processor configured to identify whether a low-power state of an external device is supported based on identification information of the external device according to a preset condition, control the communication interface to transmit a first control command corresponding to the low-power state of the external device to the external device based on the external device supporting the low-power state, and control the communication interface to transmit a second control command corresponding to a power control of the external device to the external device based on the external device not supporting the low-power state.

In one example embodiment there is provided a control method of an electronic device, the method including identifying whether a low-power state of an external device is supported based on identification information of the external device according to a preset condition, transmitting a first control command corresponding to the low-power state of the external device to the external device based on the external device supporting the low-power state, and transmitting a second control command corresponding to a power control of the external device to the external device based on the external device not supporting the low-power state.

In one example, there is provided a computer-readable recording medium including a program that executes a control method of an electronic device, the control method of the electronic device including identifying whether a low-power state of an external device is supported based on identification information of the external device according to a preset condition, transmitting a first control command corresponding to the low-power state of the external device to the external device based on the external device supporting the low-power state, and transmitting a second control command corresponding to a power control of the external device to the external device based on the external device not supporting the low-power state.

### [Description of Drawings]

FIG. 1 is a diagram illustrating a plurality of electronic devices positioned within a home;
FIG. 2 is a block diagram illustrating a configuration of an electronic device;
FIG. 3 is a diagram illustrating an electronic device transmitting a control command to an external device;
FIG. 4 is a diagram illustrating an electronic device transmitting an IR signal to an external device;
FIG. 5 is a diagram illustrating an electronic device re-transmitting an IR signal;
FIG. 6 is a diagram illustrating an electronic device sensing an operation of an external device;
FIG. 7 is a diagram illustrating an electronic device transmitting a control command to an external device communicating with an electronic device;
FIG. 8 is a diagram illustrating an electronic device transmitting a control command to an external device connected by wire with an electronic device;
FIG. 9 is a diagram illustrating a preset condition; and
FIG. 10 is a flowchart illustrating a control method of an electronic.

### [Mode for Invention]

The disclosure will be described in detail below with reference to accompanying drawings.

Terms used in describing an embodiment of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in a relevant description. Accordingly, the terms used herein are not to be understood simply as its designation but based on the meaning of the term and the overall context of the disclosure.

In the disclosure, expressions such as "have", "may have", "include", and "may include" are used to designate a presence of a corresponding characteristic, e.g., elements such as numerical value, function, operation, or component, and not to preclude a presence or a possibility of additional characteristics.

The expression at least one from among A and/or B is to be understood as indicating any one of "A" or "B" or "A and B".

Expressions such as "1st", "2nd", "first" or "second" used in the disclosure may limit various elements regardless of order and/or importance, and may be used merely to distinguish one element from another element and not limit the relevant element.

When a certain element, e.g., a first element, is indicated as being "(operatively or communicatively) coupled with/to" or "connected to" another element, e.g., a second element, it may be understood as the certain element being directly coupled with/to the another element or as being coupled through other element, e.g., a third element.

A singular expression includes a plural expression, unless otherwise specified. It is to be understood that the terms such as "form" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

The term "module" or "part" used in the disclosure perform at least one function or operation, and may be implemented with a hardware or software, or implemented with a combination of hardware and software. In addition, a plurality of "modules" or a plurality of "parts," except for a "module" or a "part" which needs to be implemented to a specific hardware, may be integrated in at least one module and implemented with at least one processor (not shown).

In the disclosure, the term "user" may refer to a person using an electronic device or a device, e.g., an artificial intelligence electronic device, using the electronic device.

An embodiment of the disclosure will be described in greater detail below with reference to the accompanied drawings.

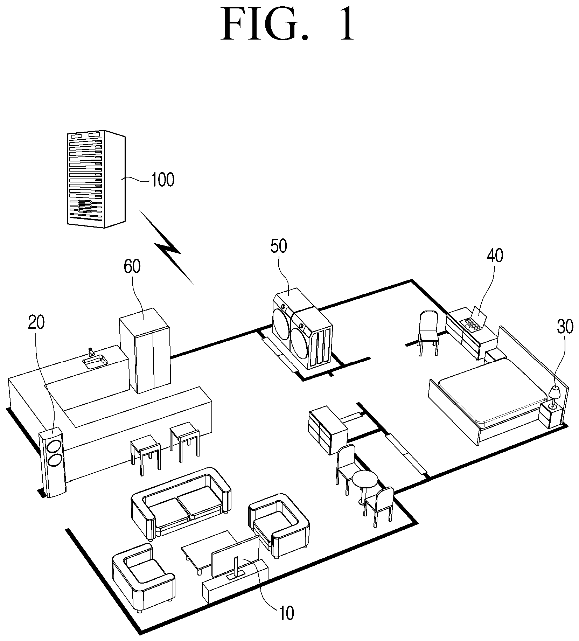

FIG. 1 is a diagram illustrating a plurality of electronic devices positioned within a home.

Referring to FIG. 1, devices in the plurality of electronic devices 10, 20, ..., 60 may be electronic devices of various types.

Specifically, the devices in the plurality of electronic devices 10, 20, ..., 60 may be implemented as Internet of Things, IoT, devices, and perform communication with other electronic devices, user terminal devices, remote control devices, a server 100, and the like provided within the home. The electronic devices 10, 20, ..., 60 may additionally, or alternatively include an IR transceiver, and be configured to transmit and receive IR signals from the other electronic devices, the user terminal devices, the remote control devices, and the like. In addition, a subset of the electronic devices from the plurality of electronic devices 10, 20, ..., 60 may transmit and receive control signals by performing wired/wireless communication with the other electronic devices.

The electronic devices 10, 20, ..., 60 shown in FIG. 1 may be of various types, for example an air conditioner, a kitchen/cooking device, a wired/wireless cleaning device, an image processing device, a clothes cleaning/management device, or the like.

For example, the electronic devices 10, 20, ..., 60 may include at least one from among a television, a user terminal device, a tablet personal computer, a mobile phone, a video phone, an e-book reader, a desktop personal computer, a laptop personal computer, a netbook computer, a workstation, a server, a personal digital assistant , a portable multimedia player, an MP3 player, a medical device, a camera, a virtual reality implementation device, or a wearable device. Here, the wearable device may include at least one from among an accessory type e.g., a watch, a ring, a bracelet, an anklet, a necklace, a pair of glasses, a contact lens or a head-mounted-device , a fabric or a garment-embedded type e.g., electronic clothing, a body-attached type e.g., a skin pad or a tattoo, or a bio-implantable circuit. In some embodiments, the electronic devices 10, 20, ..., 60 may include at least one from among a television, a digital video disk player, an audio device, a refrigerator, an air conditioner, a cleaner, an oven, a microwave, a washer, an air purifier, a media source device e.g., a set-top box, a cloud server, an over-the-top media service server, etc., a home automation control panel, a security control panel, a media box e.g., Samsung HomeSyncTM, Apple TVTM, or Google TVTM, a game console e.g., XboxTM, PlayStationTM, SwitchTM, an electronic dictionary, an electronic key, a camcorder, or an electronic picture frame.

In another embodiment, the electronic devices 10, 20, ..., 60 may include at least one from among various medical devices e.g., various portable medical measurement devices such as a glucose measuring device, a heart rate measuring device, a blood pressure measuring device, a temperature measuring device, etc., a magnetic resonance angiography device, a magnetic resonance imaging device , a computed tomography device, an imaging device, an ultrasonic device, etc., a navigation device, a global navigation satellite system, an event data recorder, a flight data recorder, a vehicle infotainment device, a piece of nautical electronic equipment e.g., a nautical navigation device, a gyro compass, etc., an avionics electronic device, a security device, a vehicle head unit, an industrial or household robot, a drone, an automated teller machine of financial institutions, a point of sales terminal for a shop, or an internet of things device e.g., a light bulb, various sensors, a sprinkler device, a fire alarm, a thermostat, a street light, a toaster, a piece of exercise equipment, a hot water tank, a heater, a boiler, etc..

According to an example, in order to reduce a total power consumption of a household according to power consumptions of the electronic devices 10, 20, ..., 60, the electronic devices 10, 20, ..., 60 may operate in a low-power state, also referred to as a low-power mode.

For example, if a request to enter a state of decreased power consumption is provided according to a user input through a user terminal device, the server 100, or a first electronic device 10 provided within the home, is configured to transmit a control command for the low-power state to the electronic devices 10, 20, ..., 60.

For example, if the state of decreased power consumption is requested, the server 100, or the first electronic device 10, is configured to transmits an appropriate control command for the low-power state to a subset of the plurality of electronic devices 10, 20, ..., 60. The subset in this example comprises the electronic devices from the plurality of electronic devices 10, 20, ..., 60 that support a low-power state. The server 100, or the first electronic device 10, is configured to transmit a control command corresponding to power control operation, e.g., turning-off power, to the remaining electronic devices of plurality of electronic devices 10, 20, ..., 60, i.e. the electronic devices that do not support a low-power state.

Here, functions and operations of the server 100 may be performed by any one from among the plurality of electronic devices 10, 20, ..., 60 provided within the household. For example, the first electronic device 10 may operate as a Hub device within the household, and the first electronic device 10 may transmit, based on a control command being received from the server 100 according to activation of the state of decreased power consumption, a control command to each of the remaining electronic devices 10, 20, ..., 60.

In the related art, if the state of decreased power consumption is requested, the server 100 may be configured to transmit the control command corresponding to the low-power state, or, operating the low-power state to only pre-registered devices from among the plurality of electronic devices 10, 20, ..., 60 within the household, and cannot transmit the control command to devices which are not pre-registered in the server 100.

Accordingly, in the related art, even if the state of decreased power consumption is activated, only devices pre-registered at the server 100 can be switched to operate in a low-power state, or, in a power off state, and because the devices which are not pre-registered in the server 100 cannot be operated in the low-power state, there is a limit on the reduction in the total power consumption of the household.

In addition, devices unable to communicate with the server 100, e.g., devices that do not include a communication interface are not registerable in the server 100, and are not able to receive the control command for operating the low-power state from the server 100. This puts a limit on the reduction in power available if the state of decreased power consumption is activated, because such devices remaining operating in a normal state, without converting to a low-power state, even if a request for operating in the state of decreased power consumption is made. Such devices that do not include a communication interface may be referred to herein as "legacy devices".

To solve the problem described above, the first electronic device 10 is configured to reduce the total power consumption of the household by operating each of the remaining electronic devices 10, 20, ..., 60 of the plurality of electronic devices in the low-power state or turning-off power to such devices, even if each of the remaining electronic devices 10, 20, ..., 60 is not pre-registered in the server 100 or is a device which is not able communicate with the server 100.

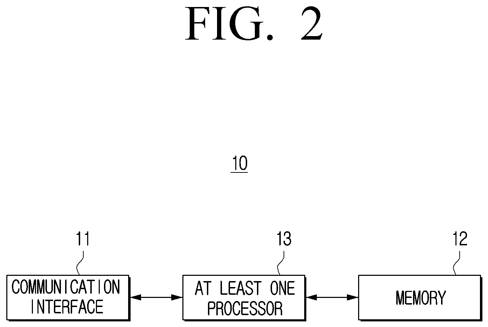

FIG. 2 is a block diagram illustrating a configuration of an electronic device 10.

Referring to FIG. 2, the electronic device 10 includes a communication interface 11, a memory 12, and at least one processor 13.

The communication interface 11 may include a wired or wireless input and output interface, or, an input and output terminal. These may be provided according to various standards. For example, the communication interface 11 may include various interfaces such as, for example, and without limitation, a high-definition multimedia interface, a mobile high-definition link, a universal serial bus interface, a display port port, a Thunderbolt connector, a video graphics array port, an RGB port, a D-subminiature port, a digital visual interface connector, an Access Point based Wi-Fi wireless LAN network, a Bluetooth interface, a ZigBee interface, a wired/wireless local area network interface, a wide area network interface, an Ethernet connector, an IEEE 1394 interface, Audio Engineering Society/European Broadcasting Union interface, optical, coaxial cable connectors or interfaces, or the like.

The communication interface 11 is configured to transmit the control command corresponding to the low-power state and/or the command for operating in the low-power state to the electronic devices 10, 20, ..., 60 under the control of the at least one processor 13.

The memory 12 is configured to store data necessary for various functions as described herein. The memory 12 may be implemented in a form of a memory embedded to the electronic device 10 according to data storage use, or implemented in a form of a memory attachable to or detachable from the electronic device 10.

For example, data for operating/driving the electronic device 10 may be stored in memory embedded in the electronic device 10, and data for an expansion function of the electronic device 10 may be stored in memory attachable to or detachable from the electronic device 10. Memory embedded in the electronic device 10 may be implemented as at least one from among a volatile memory e.g., a dynamic RAM , a static RAM, or a synchronous dynamic RAM, or a non-volatile memory e.g., a one time programmable ROM, a programmable ROM, an erasable and programmable ROM, an electrically erasable and programmable ROM, a mask ROM, a flash ROM, a flash memory e.g., NAND flash or NOR flash, a hard drive, or a solid state drive. In addition, the memory attachable to or detachable from the electronic device 10 may be implemented in a form such as a memory card e.g., a compact flash , a secure digital, a micro secure digital, a mini secure digital, an extreme digital, a multi-media card, etc., an external memory e.g., USB memory connectable to a USB port, or the like.

The memory 12 according stores at least one instruction or set of instructions or computer program including instructions for controlling the electronic device 10.

The memory 12 stores identification information of the electronic devices 10, 20, ..., 60 in the plurality of electronic devices.

In an example, identification information of the respective electronic devices 10, 20, ..., 60 in the plurality of electronic devices may include information on whether a low-power state of a device can be supported by the respective device, and communication standard information with which communication with the respective device is possible. The communication information may thus correspond to a communication method supported by a device, etc.

The identification information of each of the respective electronic devices 10, 20, ..., 60 may include position information of the device.

The memory 12 may include spatial information corresponding to a space, e.g., a house, and the spatial information may classify the space into a plurality of subspaces. The space in the disclosure may include a preset area.

For example, the spatial information may be a map corresponding to a space within the home, and the respective sub spaces may include one space partitioned by a user, an independent space e.g., a living room, a kitchen, a dressing room, etc. surrounded by obstacles e.g., wall surfaces, thresholds, etc..

The spatial information may classify the respective sub spaces into a common space or a private space. The common space according to an example e.g., the living room may be a sub space identified with a relatively large number of users e.g., three or more persons, and the private space e.g., the bedroom may be a sub space identified with a relatively small number of users e.g., one to two persons.

The at least one processor 13 is configured to control the overall operation of the electronic device 10.

According to an embodiment, the at least one processor 13 may be implemented as a digital signal processor for processing a digital image signal, a microprocessor, or a time controller. However, the embodiment is not limited thereto, and may include one or more from among a central processing unit, a micro controller unit, a micro processing unit a controller, an application processor, a communication processor, an ARM processor, an artificial intelligence processor, or the like. In addition, the at least one processor 13 may be implemented with a System on Chip or a large scale integration in which a processing algorithm is embedded, and may be implemented in a form of a field programmable gate array. The at least one processor 13 is configured to perform various functions by executing computer executable instructions stored in the memory 12.

The at least one processor 13 is configured to identify whether a low-power state of an external device can be supported based on identification information of the external device, according to a preset condition. Here, the preset condition may include the user input a command requesting activation of the state of decreased power consumption.

In an example, the at least one processor 13 is configured to identify, based on a control command activating the low-power state being received from the server 100 according to the user input activating the state of decreased power consumption, whether one or more of the other electronic devices supports the low-power state based on identification information of the other electronic device(s) as stored in the memory 12.

The at least one processor 13 according to an example may control, based on another electronic device supporting the low-power state, the communication interface 11 to transmit a first control command which operates the another electronic device in the low-power state to the another electronic device. According to an example, the at least one processor 13 may transmit the first control command to the another electronic device in a communication method corresponding to the communication standard information included in the identification information of the another electronic device.

The at least one processor 13 according to an example may control, based on another electronic device not supporting the low-power state, the communication interface 11 to transmit a second control command which controls power of the another electronic device (e.g., turning-off power of the another device) to the another electronic device. According to an example, the at least one processor 13 may transmit the second control command to the another electronic device in a communication method corresponding to the communication standard information included in the identification information of the another electronic device.

The at least one processor 13 according to an example may operate in the low-power state according to a control command received from the server.

### <Transmitting a control command to the respective electronic devices 10, 20, ..., 60 >

The at least one processor 13 according to an example of the disclosure may operate in the low-power state if the first electronic device 10 supports the low-power state based on the identification information of the first electronic device 10 according to the user input activating the power consumption decreasing state.

The at least one processor 13 according to an example may control power of the first electronic device 10 if the first electronic device 10 does not support the low-power state (e.g., power of the first electronic device 10 may be turned-off).

The at least one processor 13 according to an example may transmit the first control command to a portion of the electronic devices that support the low-power state based on identification information of each of a second electronic device 20 to a sixth electronic device 60 provided in the space (or, preset area), and transmit the second control command to the remaining electronic devices that do not support the low-power state. Here, the first control command may be a control command activating the low-power state, and the second control command may be a control command turning-off the device.

### <Transmitting a control command to a portion of the electronic devices from among the plurality of electronic devices 10, 20, ..., 60>

The at least one processor 13 according to an example of the disclosure may identify a portion of the electronic devices (e.g., the second electronic device 20) adjacent to the first electronic device 10 (or, positioned in a same sub space as with the first electronic device 10) from among the plurality of sub spaces based on the spatial information stored in the memory 12 according to the user input activating the power consumption decreasing state.

According to an example, the at least one processor 13 may transmit the first control command if the second electronic device 20 supports the low-power state based on identification information of the second electronic device 20. According to an example, the at least one processor 13 may transmit the second control command if the second electronic device 20 does not support the low-power state.

### <Transmitting a control command to a portion of the electronic devices corresponding to a user currently absent from among the plurality of electronic devices 10, 20, ..., 60>

The at least one processor 13 according to an example of the disclosure may obtain use pattern information corresponding to a user.

In an example, the at least one processor 13 may obtain the use pattern information by identifying an electronic device mainly used by a user, and time the relevant electronic device is mainly used by sensing the user through a sensor (or, a sensor part) provided in the electronic device 10 or communicating with the remaining electronic devices 10, 20, ..., 60. Meanwhile, the at least one processor 13 may obtain the use pattern information corresponding to the user, and transmit to the electronic device 10 after the server 100 has obtained the use pattern information.

The at least one processor 13 according to an example of the disclosure may identify, based on the user input activating the power consumption decreasing state being received from the user, the portion of electronic devices (e.g., the first electronic device 10 and the second electronic device 20) mainly used by the user according to the use pattern information corresponding to the user.

The at least one processor 13 according to an example of the disclosure may identify, based on an absence of the user being identified within the space (e.g., within the household) (or, within the preset area), the portion of electronic devices (e.g., the first electronic device 10 and the second electronic device 20) mainly used by the user according to the use pattern information corresponding to the user currently absent. For example, the at least one processor 13 may identify whether the user is absent through the sensor (e.g., a camera, a microphone, etc.) (or, the sensor part) provided in the electronic device 10.

The at least one processor 13 according to an example may transmit the first control command or the second control command to the portion of the electronic devices mainly used by the user.

For example, the at least one processor 13 may operate the first electronic device 10 in the low-power state according to the first control command if the first electronic device 10 supports the low-power state based on identification information of the first electronic device 10 mainly used by the user.

For example, the at least one processor 13 may transmit the second control command for controlling power of the second electronic device 20 (e.g., for turning-off the second electronic device 20) to the second electronic device 20 if the second electronic device 20 does not support the low-power state based on identification information of the second electronic device 20 mainly used by the user.

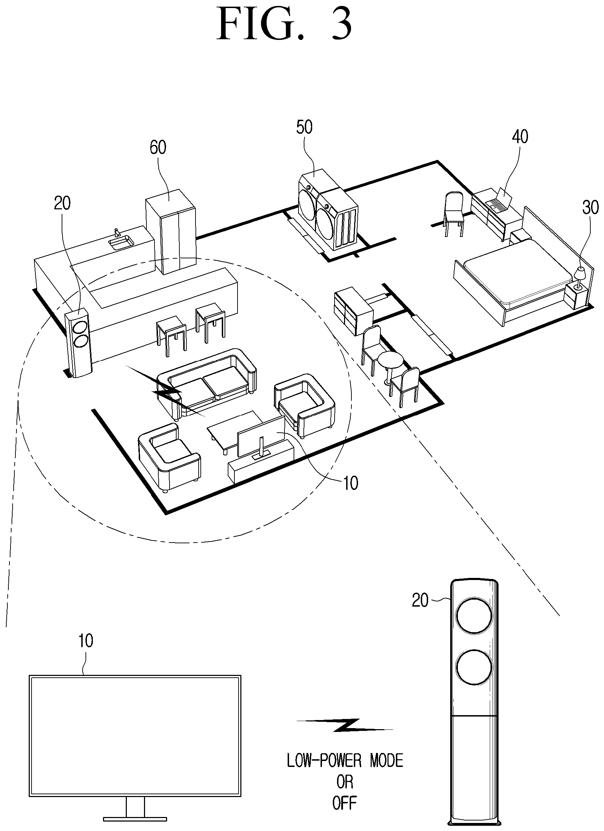

FIG. 3 is a diagram illustrating an electronic device transmitting a control command to an external device according to an embodiment of the disclosure.

According to an example of the disclosure, the server 100 may transmit a control command converting to the low-power state to the electronic device 10 according to receiving the user input activating the power consumption decreasing state from the user, or a preset time (e.g., time to activating the power consumption decreasing state).

According to an example, if the respective electronic devices 10, 20, ..., 60 provided within the space (or, within the preset area) are devices pre-registered in the server 100, the server 100 may transmit the control command converting to the low-power state to the respective electronic devices 10, 20, ..., 60.

However, if a portion from among the plurality of electronic devices 10, 20, ..., 60 are devices which are not pre-registered in the server 100, or devices which cannot communicate with the server 100, the control command converting to the low-power state may not be received from the server 100.

Referring to FIG. 3, the second electronic device 20 (e.g., an air conditioner) according to an example of the disclosure may be a device which is not pre-registered in the server 100, or a device which cannot be registered in the sever 100, or a device which cannot communicate with the server 100. According to an example, the second electronic device 20 may be a device which includes a communication interface, and can perform wired/wireless communication (e.g., ZigBee, Wi-Fi, etc.) with the first electronic device 10 (e.g., IoT). For example, registrability in the server 100 may vary according to a manufacturer of the device. According to an example, the first electronic device 10 may be registered in the server 100, but the second electronic device 20 may not be registered in the server 100 despite including the communication interface.

The at least one processor 13 according to an example may transmit the first control command to the second electronic device 20 if the second electronic device 20 supports the low-power state based on the identification information of the second electronic device 20. The least one processor 13 according to an example may transmit the second control command to the second electronic device 20 if the second electronic device 20 does not support the low-power state.

The at least one processor 13 according to an example may obtain identification information of each of the remaining electronic devices 10, 20, ..., 60 by identifying the each of the remaining electronic devices 10, 20, ..., 60 provided within the space through the sensor (e.g., a camera) (or, the sensor part) provided in the first electronic device 10.

The at least one processor 13 according to an example may obtain identification information of each of the remaining electronic devices 10, 20, ..., 60 if product names of each of the remaining electronic devices 10, 20, ..., 60 are input from the user.

The at least one processor 13 according to an example may receive identification information of the respective electronic devices 10, 20, ..., 60 provided within the space from the server 100.

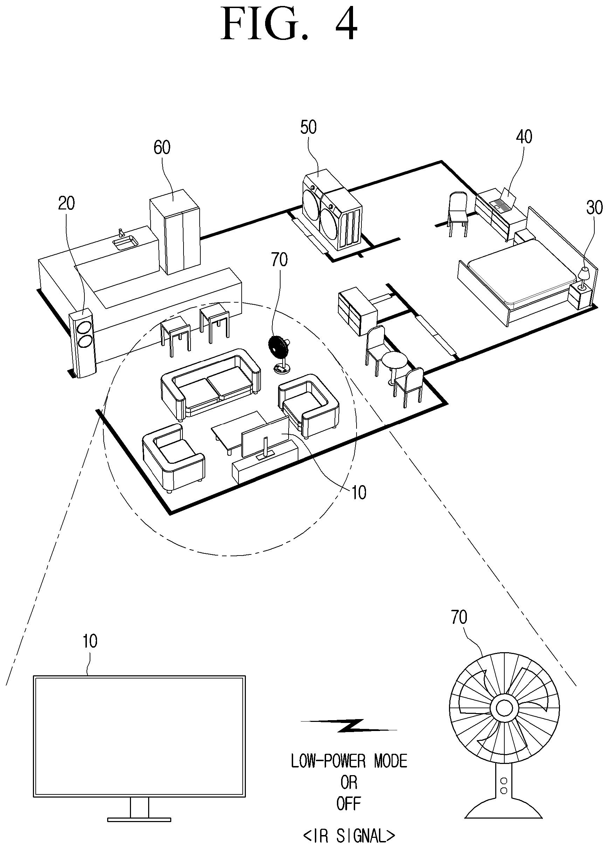

FIG. 4 is a diagram illustrating an electronic device transmitting an IR signal to an external device according to an embodiment of the disclosure.

Referring to FIG. 4, a seventh electronic device 70 (e.g., a fan) according to an example of the disclosure may be a device incapable of communicating with the server 100 (e.g., the legacy device).

According to an example, the seventh electronic device 70 may include an IR transceiver, receive an IR signal (or, an IR control signal) for controlling the seventh electronic device 70 from a remote control device, and operate according to the IR signal.

The first electronic device 10 according to an example may include an IR transceiver, and obtain (or, receive, perform sniffing) the IR signal for controlling the seventh electronic device 70 positioned adjacently to the first electronic device 10 through the IR transceiver provided in the first electronic device 10.

The at least one processor 13 according to an example may obtain a control code set for controlling the seventh electronic device 70 based on the received IR signal. The at least one processor 13 according to an example may obtain identification information of the seventh electronic device 70 based on the received IR signal.

The at least one processor 13 according to an example of the disclosure may control, based on it being identified that communication with the seventh electronic device 70 through the communication interface 11 is not possible based on the identification information of the seventh electronic device 70, the IR transceiver provided in the first electronic device 10 so as to transmit a first IR control signal corresponding to the first control command or a second IR control signal corresponding to the second control command according to whether the seventh electronic device 70 supports the low-power state.

In an example, the at least one processor 13 may transmit, based on it being identified that the communication method supported by the seventh electronic device 70 is an IR communication based on the identification information of the seventh electronic device 70, the first IR control signal corresponding to the first control command to operate the seventh electronic device 70 in the low-power state based on the control code set.

In an example, the at least one processor 13 may transmit the second IR control signal corresponding to the second control command for turning-off the seventh electronic device 70 based on the control code set if the seventh electronic device 70 does not support the low-power state based on the identification information of the seventh electronic device 70.

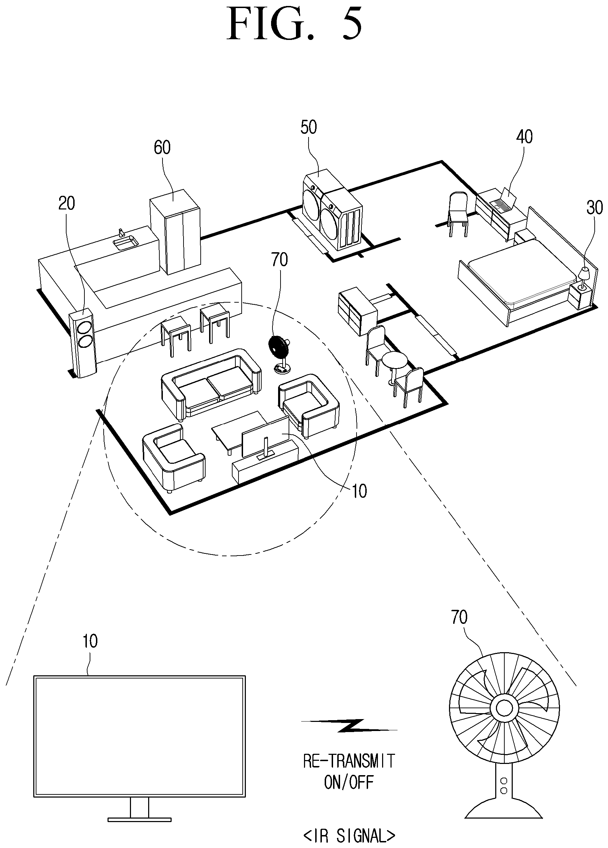

FIG. 5 is a diagram illustrating an electronic device re-transmitting an IR signal according to an embodiment of the disclosure.

According to an example of the disclosure, if the seventh electronic device 70 does not support the low-power state, the at least one processor 13 may transmit the second IR control signal for turning-off the seventh electronic device 70 based on the control code set.

According to an example, the IR control signal for turning-on the seventh electronic device 70 and the IR control signal for turning-off the seventh electronic device 70 included in the control code set may be the same (e.g., an on button and an off button within the remote control device for controlling the seventh electronic device 70 may be the same).

The at least one processor 13 may identify, based on the IR control signal for turning-on the seventh electronic device 70 and the IR control signal for turning-off the seventh electronic device 70 included in the control code set being the same, whether the seventh electronic device 70 is operated after transmitting the IR control signal for turning-on or turning-off the seventh electronic device 70.

The at least one processor 13 according to an example may re-transmit, based on the seventh electronic device 70 being identified as operating (or, identified as in operation), the IR control signal for turning-on or turning-off the seventh electronic device 70.

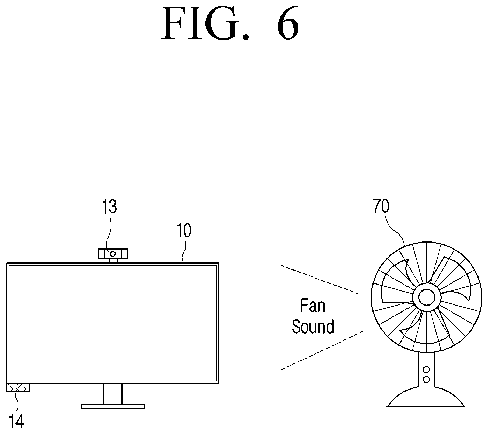

FIG. 6 is a diagram illustrating an electronic device sensing an operation of an external device according to an embodiment of the disclosure.

The first electronic device 10 according to an example may include a sensor (e.g., a camera 13, a microphone 14, etc.) (or, sensor part). The at least one processor 13 may identify whether the external device is operated based on sensing data (e.g., an image signal, a voice signal, etc.) obtained through the sensor. Here, the sensing data may be a term for convenience of description, and may include data of various types.

The at least one processor 13 according to an example may obtain an image signal including the seventh electronic device 70 through the camera 13 after transmitting the IR control signal for turning-on or turning-off the seventh electronic device 70.

The at least one processor 13 may identify whether the seventh electronic device 70 is operated based on the image signal.

The at least one processor 13 according to an example may obtain a voice signal (e.g., noise, vibrations, etc.) according to an operation of the seventh electronic device 70 through the microphone 14 after transmitting the IR control signal for turning-on or turning-off the seventh electronic device 70.

The at least one processor 13 may identify whether the seventh electronic device 70 is operated based on the voice signal.

The at least one processor 13 may re-transmit, based on the seventh electronic device 70 operating according to the identification result (or, in operation), the IR control signal for turning-on or turning-off the seventh electronic device 70.

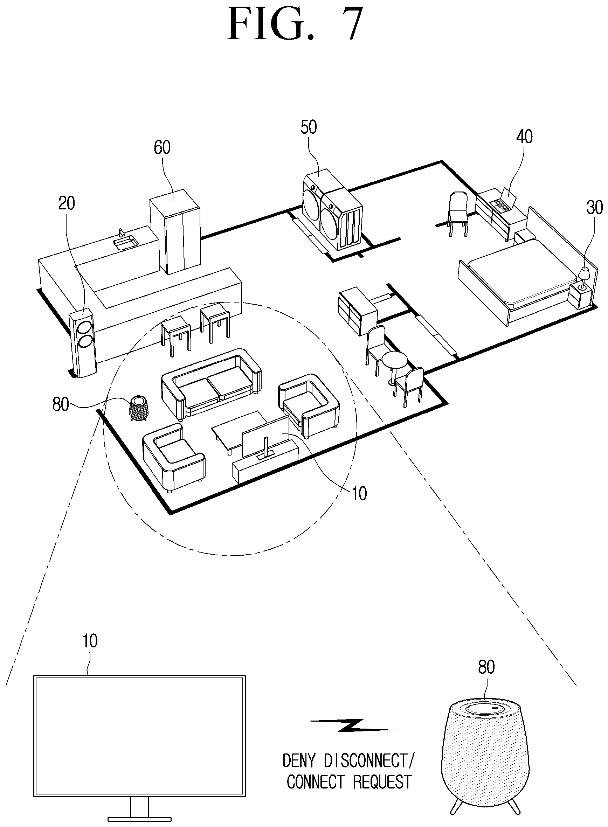

FIG. 7 is a diagram illustrating an electronic device transmitting a control command to an external device communicating with an electronic device according to an embodiment of the disclosure.

An eighth electronic device 80 (e.g., an AI speaker) according to an example of the disclosure may be a device (e.g., a BT device) which includes a communication interface and can perform wireless communication (e.g., Bluetooth communication) with the first electronic device 10.

The eighth electronic device 80 according to an example of the disclosure may be converted to the low-power state (or, a sleep state, a standby state, etc.) if connection with a master device (e.g., the first electronic device 10) is disconnected, and is not re-connected with the master device for a certain time.

The at least one processor 13 according to an example may disconnect connection with the eighth electronic device 80 connected to the first electronic device 10 if the power consumption decreasing state is activated. For example, the at least one processor 13 may disconnect the Bluetooth connection if the eighth electronic device 80 connected with the first electronic device 10 through Bluetooth communication is identified, and the eighth electronic device 80 which is disconnected from the connection with the master device (e.g., the first electronic device 10) may be converted to the low-power state.

According to an example, the eighth electronic device 80 which is disconnected from Bluetooth connection may transmit a connection request signal to the master device for a certain time.

The at least one processor 13 according to an example may deny, based on a connection request signal for re-connection being received from the eighth electronic device 80 after the Bluetooth connection is disconnected, the connection request signal received from the eighth electronic device 80 for a certain time (or, a threshold time), and the eighth electronic device 80 which is not re-connected with the master device may be converted to the low-power state.

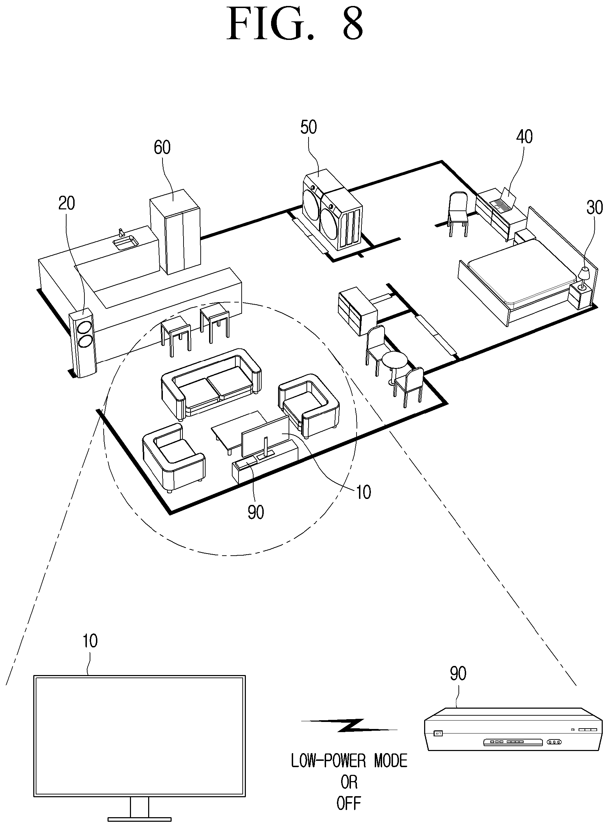

FIG. 8 is a diagram illustrating an electronic device transmitting a control command to an external device connected by wire with an electronic device according to an embodiment of the disclosure.

According to an example of the disclosure, the server 100 may transmit the control command converting to the low-power state to the first electronic device 10 according to receiving the user input activating the power consumption decreasing state from the user or according to the preset time (e.g., time to activating the power consumption decreasing state).

A ninth electronic device 90 (e.g., a set-top box) according to an example of the disclosure may be a device which includes a communication interface, and performs wired communication (e.g., USB, HDMI, etc.) with first electronic device 10 by being connected via wired means.

The at least one processor 13 according to an example of the disclosure may identify whether the ninth electronic device 90 supports the low-power state based on identification information received from the ninth electronic device 90.

The at least one processor 13 according to an example may transmit, based on the ninth electronic device 90 supporting the low-power state, the first control command to the ninth electronic device 90. The at least one processor 13 according to an example may transmit, based on the ninth electronic device 90 not supporting the low-power state, the second control command to the ninth electronic device 90.

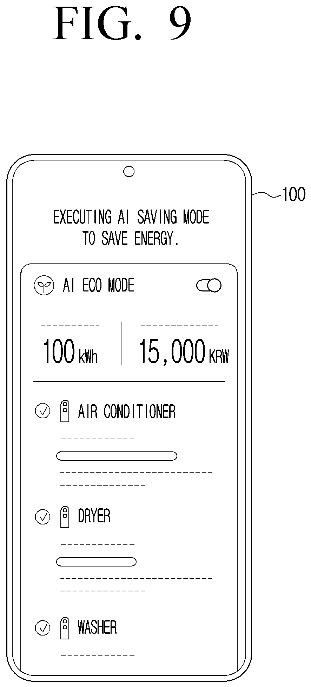

FIG. 9 is a diagram illustrating a preset condition according to an embodiment of the disclosure.

A user terminal device 1000 according to an example of the disclosure may support a user UI for executing the power consumption decreasing state within the space.

For example, based on the user input of executing the power consumption decreasing state within the space (or, a user input for executing a function corresponding to a decrease in power consumption), the server 100 may transmit a control command operating the low-power state to a device which is pre-registered in the server 100 and can communicate with the server 100 from among a plurality of electronic devices 10, 20, ..., 90.

When the first electronic device 10 according to an example receives a control command from the server, the first electronic device 10 may transmit the first control command or the second control command according to whether the low-power state is supported to the remaining electronic devices 20, ..., 90.

The user UI according to an example may include a user interface (UI) for operating at least one from among the plurality of electronic devices 10, 20, ..., 90 in the low-power state, and display state information of the respective electronic devices 10, 20, ..., 90.

The user UI according to an example may support operations which are limited when the respective electronic devices 10, 20, ..., 90 are operated in the low-power state (e.g., an unusable function (disable)), an estimated power consumption, and the like.

The user UI according to an example may support total power consumption within a current household, power consumption estimated to decrease when the external device corresponding to the user identified as absent is converted to the low-power state, and the like.

Referring back to FIG. 2, the at least one processor 13 may identify power consumption information for the respective electronic devices 10, 20, ..., 90 positioned within the space.

Identification information corresponding to the electronic device 10 according to an example of the disclosure may include power consumption information according to use of the electronic device 10.

The at least one processor 13 according to an example of the disclosure may identify, based on the power consumption information of the electronic device 10, whether the electronic device 10 is a device which requires conversion to the low-power state when the power consumption decreasing state is activated.

For example, the at least one processor 13 may identify, if power consumption is greater than or equal to a threshold value based on the power consumption information of the first electronic device 10, the first electronic device 10 as the device which is required to convert to the low-power state for a decrease in power consumption within the home because the power consumption is relatively high. Hereinafter, the device required to convert to the low-power state may be collectively referred to as a device subject to a decrease in power consumption.

The at least one processor 13 according to an example may turn-off, based on the first electronic device 10 not supporting the low-power state, the first electronic device 10 according to the second control command of turning-off the first electronic device 10 according to whether the first electronic device 10 is the device subject to a decrease in power consumption.

In another example, the at least one processor 13 may identify whether the second electronic device 20 is a device subject to a decrease in power consumption based on the power consumption information included in the identification information of the second electronic device 20. Then, the at least one processor 13 may transmit, based on the second electronic device 20 not supporting the low-power state, and the second electronic device 20 being identified as the device subject to a decrease in power consumption, the second control command of turning-off the second electronic device 20 to the second electronic device 20.

In another example, the at least one processor 13 may not turn-off the second electronic device 20 based on the second electronic device 20 not supporting the low-power state, and the second electronic device 20 not being identified as the device subject to a decrease in power consumption.

In the various examples described above, the at least one processor 13 may not transmit the second control command for turning-off the electronic device 10 to the electronic device 10 even if the power consumption decreasing state is activated if the electronic device 10 that does not support the low-power state is not the device subject to a decrease in power consumption.

For example, if the power consumption of the electronic device 10 is less than the threshold value, the electronic device 10 may not be turned-off because the estimated decrease in power consumption according to the turning-off of the electronic device 10 is insignificant. For example, because the electronic device 10 which has the power consumption of less than the threshold value can be a sensor device (e.g., a door sensor, a light sensor, a gas detector, a smoke detector, etc.) which requires maintaining of an on-state at all times, it may not be turned-off.

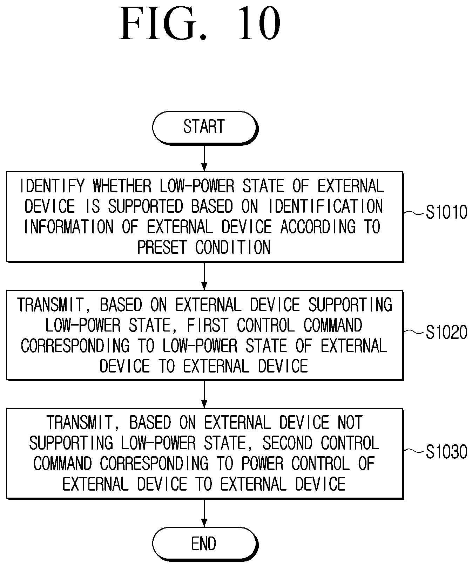

FIG. 10 is a flowchart illustrating a control method of an electronic device according to an embodiment of the disclosure.

The control method of the electronic device according to an embodiment of the disclosure may include identifying whether the low-power state of the external device is supported based on identification information of the external device according to the preset condition (S1010).

Then, the method may include transmitting the first control command corresponding to the low-power state of the external device to the external device based on the external device supporting the low-power state (S 1020).

Then, the method may include transmitting the second control command corresponding to the power control of the external device to the external device based on the external device not supporting the low-power state (S 1030).

The control method according to an example of the disclosure may further include identifying the external device according to the power consumption information obtained for the respective external devices within the preset area as a device subject to the low-power state, the step S1020 of transmitting the first control command may include transmitting the first control command based on the external device supporting the low-power state, and the step S 1030 of transmitting the second control command may include transmitting the second control command based on the external device not supporting the low-power state.

The control method according to an example of the disclosure may further include identifying an external device that consumes a threshold power or more from among a plurality of external devices based on the power consumption information as the device subject to a decrease in power consumption.

The control method according to an example of the disclosure may further include transmitting, based on communication with the external device not being possible, a first IR signal corresponding to the first control command or a second IR signal corresponding to the second control command according to whether the low-power state of the external device is supported.

The control method according to an example of the disclosure may include re-transmitting the second IR signal based on the external device being identified as operating based on data obtained through the sensor part provided in the electronic device after transmitting the second IR signal.

The data according to an example of the disclosure may include at least one from among an image signal obtained through the camera included in the sensor part or a voice signal obtained through the microphone included in the sensor part.

The control method according to an example of the disclosure may include obtaining a code set corresponding to control by the external device based on a control signal for controlling the external device and obtaining the first IR signal or the second IR signal based on the code set.

The control method according to an example of the disclosure may include controlling, based on being connected with the external device through a Bluetooth communication interface, connection with the external device through the Bluetooth communication interface to disconnect according to the preset condition and controlling to deny a connection request signal of the external device through the Bluetooth communication interface for a threshold time.

Step S1020 of transmitting the first control command and step S1030 of transmitting the second control command according to an example of the disclosure may include transmitting, based on being connected with the external device through a wired communication interface, the first control command or the second control command according to whether the low-power state is supported through the wired communication interface.

The preset condition according to an example of the disclosure may include at least one from among the preset time or a user input for executing a function corresponding to the decrease in power consumption within the preset area. However, the various embodiments of the disclosure may be applied to not only the electronic device, but also to electronic devices of various types capable of communicating with the external device.

Meanwhile, the various embodiments described above may be implemented in a recordable medium which is readable by a computer or a device similar to the computer using software, hardware, or a combination of software and hardware. In some cases, the embodiments described herein may be implemented by the processor itself. According to a software implementation, embodiments such as the procedures and functions described herein may be implemented with separate software modules. The respective software modules may perform at least one functions and operation described herein.

Meanwhile, computer instructions for performing processing operations of the display device 100 according to the various embodiments described above may be stored in a non-transitory computer-readable medium. The computer instructions stored in this non-transitory computer-readable medium may cause a specific device to perform a processing operation in the display device 100 according to the above-described various embodiments when executed by a processor of the specific device.

The non-transitory computer-readable medium may refer to a medium that stores data semi-permanently rather than storing data for a very short time, such as a register, a cache, a memory, or the like, and is readable by a device. Specific examples of the non-transitory computer readable medium may include, for example, and without limitation, a compact disc (CD), a digital versatile disc (DVD), a hard disc, a Blu-ray disc, a USB, a memory card, a ROM, and the like.

While example embodiments of the disclosure have been illustrated and described above, it will be understood that the embodiments are intended to be illustrative, not limiting. It will be understood by those skilled in the art that various changes in form and details may be made therein without departing from the true spirit and full scope of the disclosure, including the appended claims and their equivalents.

## Claims

1. An electronic device, comprising:
a communication interface; and
at least one processor,
wherein the at least one processor is configured to
identify whether a low-power state of an external device is supported based on identification information of the external device according to a preset condition,
control the communication interface to transmit a first control command corresponding to the low-power state of the external device to the external device based on the external device supporting the low-power state, and
control the communication interface to transmit a second control command corresponding to a power control of the external device to the external device based on the external device not supporting the low-power state.

2. The electronic device of claim 1, wherein
the at least one processor is configured to
transmit, based on the external device being identified as a device subject to the low-power state according to power consumption information obtained for a plurality of external devices, respectively, within a preset area, the first control command or the second control command according to whether the low-power mode of the external device is supported.

3. The electronic device of claim 2, wherein
the at least one processor is configured to
identify the external device that consumes a threshold power or more from among the plurality of external devices as the device subject to a decrease in power consumption based on the power consumption information.

4. The electronic device of claim 1, further comprising:
an IR transceiver,
wherein the at least one processor is configured to
control, based on communication with the external device not being possible through the communication interface, the IR transceiver to transmit a first IR signal corresponding to the first control command or a second IR signal corresponding to the second control command according to whether the low-power state is supported.

5. The electronic device of claim 4, further comprising:
a sensor part,
wherein the at least one processor is configured to
control, based on the external device being identified as operating based on data obtained through the sensor part after transmitting the second IR signal, the IR transceiver to re-transmit the second IR signal.

6. The electronic device of claim 5, wherein
the sensor part comprises
at least one from among a camera or a microphone, and
the data comprises
at least one from among an image signal obtained through the camera or a voice signal obtained through the microphone.

7. The electronic device of claim 4, wherein
the at least one processor is configured to
obtain a code set corresponding to control by the external device based on a control signal for controlling the external device obtained through the IR transceiver, and
obtain the first IR signal or the second IR signal based on the code set.

8. The electronic device of claim 1, wherein
the communication interface comprises
a Bluetooth communication interface connected with the external device, and
the at least one processor is configured to
control connection with the external device through the Bluetooth communication interface to disconnect according to the preset condition, and
control to deny a connection request signal of the external device through the Bluetooth communication interface for a threshold time.

9. The electronic device of claim 1, wherein
the communication interface comprises
a wired communication interface connected with the external device by wired means, and
the at least one processor is configured to
transmit the first control command or the second control command through the wired communication interface according to whether the low-power state is supported.

10. The electronic device of claim 1, wherein
the preset condition comprises
at least one from among a preset time or a user input for executing a function corresponding to a decrease in power consumption within a preset area.

11. A control method of an electronic device, the method comprising:
identifying whether a low-power state of an external device is supported based on identification information of the external device according to a preset condition;
transmitting a first control command corresponding to the low-power state of the external device to the external device based on the external device supporting the low-power state; and
transmitting a second control command corresponding to a power control of the external device to the external device based on the external device not supporting the low-power state.

12. The method of claim 11, the method further comprising:
identifying the external device as a device subject to the low-power state according to power consumption information obtained for a plurality of external devices, respectively, within a preset area,
wherein the transmitting a first control command comprises
transmitting the first control command based on the external device supporting the low-power state, and
wherein the transmitting a second control command comprises
transmitting the second control command based on the external device not supporting the low-power state.

13. The method of claim 12, the method further comprising:
identifying the external device that consumes a threshold power or more from among the plurality of external devices as the device subject to a decrease in power consumption based on the power consumption information.

14. The method of claim 11, the method further comprising:
transmitting, based on communication with the external device not being possible, a first IR signal corresponding to the first control command or a second IR signal corresponding to the second control command according to whether the low-power state of the external device is supported.

15. The method of claim 14, the method comprising:
re-transmitting the second IR signal based on the external device being identified as operating based on data obtained through a sensor part provided in the electronic device after transmitting the second IR signal.
